# EUROPEAN PATENT APPLICATION

(11) **EP 2 808 771 A1**
(43) Date of publication of application: **03.12.2014**
(21) Application number: 14168565.1
(22) Date of filing: 16.05.2014
(51) Int. Cl.: G06F 3/048

(54) **Method for processing input and electronic device thereof**

(30) Priority: 27.05.2013 KR 20130059653
(71) Applicant: Samsung Electronics Co., Ltd, Gyeonggi-do 443-742 (KR)
(72) Inventor: Park, Hyung-Jin, Gyeonggi-do (KR)
(74) Representative: Jenkins, Richard Gavin

(57) **Abstract**

A method employed by an electronic device determines a state of the electronic device in a hover input mode. The state comprises at least one of, (a) an orientation of the electronic device and (b) finger locations of a grip holding the electronic device. The method sets a hover lock region on a touchscreen in response to the determined state of the electronic device and inhibits activation of a command associated with selection of an object in the hover lock region.

## Description

### BACKGROUND

### 1. Technical Field

A system concerns a User Interface (UI) method employed by an electronic device for processing user input commands and data.

### 2. Description of the Related Art

A known electronic device is an essential communication device providing voice communication, camera, data communication, moving picture reproduction, audio reproduction, a messenger and an alarm function, for example. A known electronic device employs different executable application programs supporting these functions and enabling a user to input commands and data using different input methods and UI devices.

Known electronic devices employ a touchscreen enabling a user to input data and perform gestures for command and data entry. The touchscreen of the electronic device may use a 2 dimensional (2D) direction input in a 2D plane which the user directly touches to input data and may also use a 3D direction input in a 3D space where the user may input data without directly touching the touchscreen. However, known electronic devices offer limited flexibility and functional capability in touchscreen operation, particularly where a touchscreen is not directly touched.

### SUMMARY

An electronic device support an indirect touch input mode, determines a state of the electronic device, and determines one or more inactive regions that do not process an indirect (i.e. non-contact) touch input.

A method employed by an electronic device determines a state of the electronic device in a hover input mode. The state comprises at least one of, (a) an orientation of the electronic device and (b) finger locations of a grip holding the electronic device. The method sets a hover lock region on a touchscreen in response to the determined state of the electronic device and inhibits activation of a command associated with selection of an object in the hover lock region.

In a feature, the method determines state of the electronic device by determining a motion of the electronic device using at least one of an acceleration sensor, a gyroscope or a slope sensor and determining a user gripping state of the electronic device using a grip sensor or a touch sensor. The hover lock region is changed in response to the user gripping state and excludes a hover cursor position and is selected in response to movement of the hover cursor. The hover lock region comprises at least one of, a peripheral region of an upper portion, a lower portion, a left portion, a right portion, and a vertex region of the touchscreen. The hover lock region is determined in response to at least one of, a height at which a hover input unit is positioned from the touchscreen, an area of a hover input, a hover input start position, and a speed at which a hover input unit moves from the touchscreen. The method changes a position of a hover cursor from a hover active region to a hover lock region in response to a detected hover input, processes a command associated with the hover cursor position by at least one of, processing a command associated with an object where the hover cursor is positioned, and releasing a hover lock region.

In another feature, an electronic device comprises a touchscreen; and a processor connected to the touchscreen, determines a state of the electronic device in a hover input mode. The state comprises at least one of, (a) an orientation of the electronic device and (b) finger locations of a grip holding the electronic device. The electronic device, sets a hover lock region on a touchscreen in response to the determined state of the electronic device and inhibits activation of a command associated with selection of an object in the hover lock region.

In yet another feature the processor, initiates display of a hover cursor in a hover active region in response to a detected hover command, moves the hover cursor to the hover lock region, in response to a selection of an object positioned in the hover lock region using the hover cursor, processes a command associated with the object, and provides a processing result on the touchscreen. The processor further initiates release of a hover lock region and in response to user command the processor,
detects a hover input in the hover lock region, selects a UI object in the hover lock region, drags the selected UI object to an active region, drops the selected UI object, and processes a command associated with the object. Also the processor initiates display of a menu enabling selection of release of the hover lock region.

In a further feature an electronic device comprises one or more processors; a memory; and one or more programs stored in the memory and executed by the one or more processors to, determine at least one of, an orientation and a gripping state, of the electronic device using at least one sensor of, an acceleration sensor, a gyroscope, a slope sensor, a grip sensor, and a touch sensor in response to hover input detection. The electronic device sets a hover lock region in an active region for hover input detection in response to the determined orientation or gripping state and inhibits activation of a command associated with selection of an object in the hover lock region.

In an additional feature an electronic device comprises one or more processors; a memory; and one or more programs stored in the memory and executed by the one or more processors. The one or more programs comprise instructions to, determine a state of the electronic device during a hover input mode, set a hover lock region in a hover active region of a touchscreen in response to the determined state of the electronic device, change a position of a hover cursor in the hover active region in response to an input command, and at least one of, process an instruction associated with a hover cursor position in the hover lock region and release the hover lock region. The one or more programs comprise instructions to, inhibit activation of a command associated with selection of an object in the hover lock region. The one or more programs determines a user gripping state of the electronic device using a grip sensor or a touch sensor.

In a further feature a computer readable storage medium stores one or more programs comprising instructions, when executed by an electronic device, allowing the electronic device to perform the method of claims.

### BRIEF DESCRIPTION OF THE DRAWINGS

The above and other aspects, features and advantages of certain exemplary embodiments will be more apparent from the following description taken in conjunction with the accompanying drawings in which:
FIG. 1 shows an electronic device according to invention principles;
FIGS. 2A to 2E illustrate determining a hovering lock region in an electronic device according to invention principles;
FIGS. 3A and 3B illustrate an operation of extending a hovering lock region in an electronic device according to invention principles;
FIGS. 4A and 4B show an electronic device operation hovering input mode according to invention principles;
FIGS. 5A and 5B show an electronic device operation of releasing a hovering lock region in an electronic device according to invention principles;
FIGS. 6A and 6B show an electronic device operation of executing an object positioned in a hovering lock region according to invention principles; and
FIGS. 7A to 7D show an electronic device program operation according to invention principles.

Throughout the drawings, like reference numerals will be understood to refer to like parts, components and structures.

### DETAILED DESCRIPTION

The following description with reference to the accompanying drawings is provided to assist in a comprehensive understanding of exemplary embodiments as defined by the claims and their equivalents. It includes various specific details to assist in that understanding but these are to be regarded as merely exemplary. Accordingly, those of ordinary skill in the art will recognize that changes and modifications of the embodiments described herein can be made. Also, descriptions of well-known functions and constructions are omitted for clarity and conciseness.

An electronic device uses a touchscreen that may perform an input operation via an input unit and uses a display unit. Therefore, even though a display unit and an input unit are illustrated separately in the construction of the device, the display unit may include the input unit, or the input unit may be represented as the display unit. The electronic device includes a touchscreen but in other embodiments may include an electronic device where a display unit and an input unit are separated physically, or may including just a display unit or just an input unit. A device comprising a touchscreen may include a display unit such as a touchscreen comprising a touch input unit and a display unit, a display unit excluding a touch input unit, and a display unit including an input unit. Herein, an electronic device 100 may comprise a mobile communication terminal, a Personal Digital Assistant (PDA), a Personal Computer (PC), a laptop, a smartphone, a smart TV, a netbook, a Mobile Internet Device (MID), an Ultra Mobile PC (UMPC), a tablet PC, a mobile pad, a media player, a handheld computer, a navigation, a smart watch, an HMD, and MPEG-1 Audio Layer-3 (MP3) player, for example. In the following detailed description, mentioning a certain element is connected or coupled to another element should be understood as configuration where the certain element may be directly connected or coupled to another element but still another element may exist between them. Mentioning a certain element is directly connected or directly coupled to another element should be understood as configuration where still another element does not exist between them.

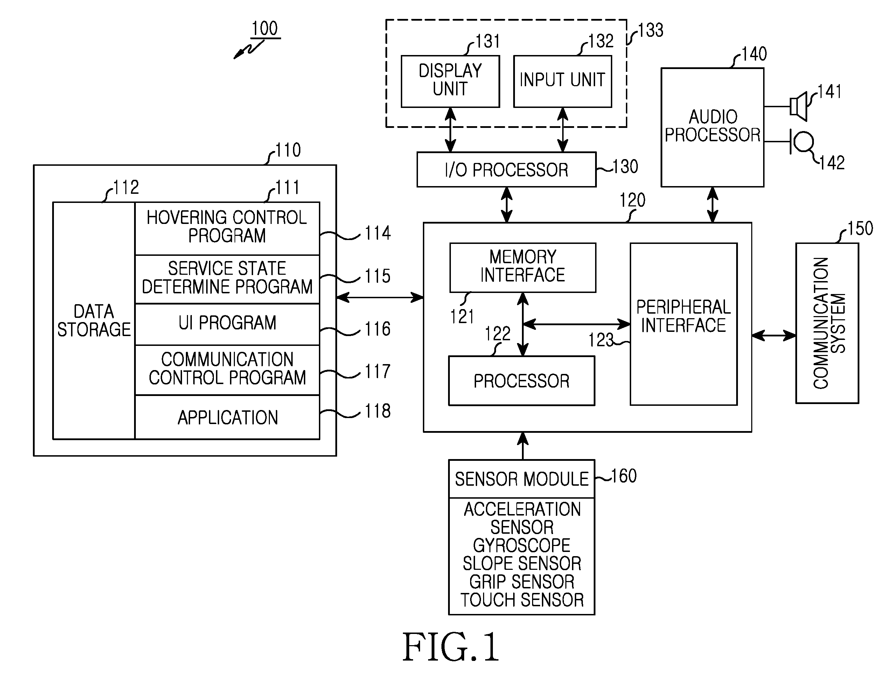

FIG. 1 shows an electronic device 100 that may include a memory 110 and a processor unit 120, and include, as peripherals, an Input/Output (I/O) processor 130, a touchscreen 133 including a display unit 131 and an input unit 132, an audio processor 140, a communication system 150, and other peripherals. The memory 110 may include a program storage 111 for storing a program for controlling an operation of the electronic device 100, and a data storage 112 for storing data generated during execution of a program. The memory 110 may store data generated from a program by an operation of the processor 122. The data storage 112 may store a function of a program, a keyword, an Identification (ID) Code, and information used by the peripherals of the electronic device 100, which may be used by a program when the electronic device 100 processes data of a program. For example, the electronic device 100 may store setting information, for example such as an inactive region setting method of the touchscreen 133 input via a hovering control program 114, an instruction execution procedure corresponding to a UI object, included in the inactive region and an inactive region release method.

The program storage 111 may include the hovering control program 114, a service state determination program 115, a User Interface (UI) program 116, a communication control program 117, and at least one executable application 118. Here, programs included in the program storage 111 may be configured as a set of instructions and expressed as an instruction set. Where the electronic device 100 executes a hovering mode, for example, the hovering control program 114 may determine information indicating the state or the position (or motion), for example of the electronic device 100 via sensors 160 such as an acceleration sensor (not shown), a gyroscope (not shown), a slope sensor (not shown), a grip sensor (not shown), a touch sensor (not shown). For example, the hovering control program 114 may determine an inactive region of the touchscreen 133 of the electronic device 100 in response to information indicating a determined state, position, or motion of the electronic device. The information indicates a position or a motion, such as movement or a gripped state of the electronic device 100, and information indicating a position or a motion, for example such as whether the electronic device 100 is used in a horizontal mode or a vertical mode.

The hovering control program 114 may detect a hover input command via the touchscreen 133. A detected hover input command in an inactive region of the touchscreen 133 is ignored. Also, the hovering control program 114 may generate a hover cursor (or a pointer) in response to a hover input, and initiate execution of a UI executable object in response to a hover input using the hovering cursor. The hovering control program 114 may determine characteristics of an inactive region of a touchscreen display and treat it as an active region on the touchscreen 133 in response to a predetermined setting. Program 114 may determine a method for controlling operation or a function of a UI object associated with the inactive region while the inactive region is selected and without releasing the inactive region. Program 114 may also determine a method for controlling release of selection of the inactive region.

The service state determine program 115 may comprise at least one software element for determining a state of a service provided by electronic device 100. The User Interface (UI) program 116 may include at least one instruction for providing a UI. The communication control program 117 may include at least one software element for controlling communication of device 100 with a different electronic device using the communication system 150. Communication control program 117 may search for a second electronic device with which to establish communication. In response to detecting a second electronic device, the communication control program 117 may establish communication with the second electronic device by retrieval of communication settings and use of a session establishment procedure. Program 117 also controls data transmission to, and reception from, the second electronic device via the communication system 150.

One or more memories 110, 111 and 112 included in the electronic device 100 store instructions executable to perform a function. The inner physical region division of the memory 110 may or may not be defined depending on a characteristic of the electronic device. The processor unit 120 includes a memory interface 121, at least one processor 122, and a peripheral interface 123 that may be integrated in at least one circuit or implemented as separate elements. The memory interface 121 may control access to elements such as the processor 122 or the peripheral interface 123 and the memory 110. The peripheral interface 123 may control connection between I/O peripherals of the electronic device 100, and the processor 122 and the memory interface 121.

The processor 122 may control the electronic device 100 to provide different multimedia services including providing a UI display on display unit 131 via the I/O processor 130 so that a user employing the UI and input unit 132 to enter commands and data to the electronic device 100. The processor 122 may execute at least one program stored in the memory 110 to control device 100. The I/O processor 130 may provide an interface between the I/O unit 133 such as the display unit 131 and the input unit 132, and the peripheral interface 123. The input unit 132 may provide input data acquired by user selection to the processor unit 120 via the I/O processor 130. The input unit 132 may be configured using a control button or a keypad in order to receive data.

In addition, the touchscreen may concurrently receive an input and provide an output and input unit 132 is included in device 100 with display unit 131. In this case, the input unit 132 used for the touchscreen may use at least one of a capacitive type, a resistive film (pressure detection) type, an infrared type, an electromagnetic inductive type, and an ultrasonic wave type. In addition, an input of the input unit 132 of the touchscreen may include directly touching the touchscreen 133 and input in response to an input object being positioned within a predetermined distance from the touchscreen 133. An input via unit 132 includes a hover or a floating touch indirect touch, a proximity touch and a non-contact input, for example. The display unit 131 may receive state information of the electronic device 100, an entered character input, a moving picture, or a still picture from the processor unit 120 to configure UI operation via the I/O controller 131. The audio processor 140 may provide an audio interface between a user and the electronic device 100 via a speaker 141 and a microphone 142.

The communication system 150 performs communication with a second electronic device using wireless or wired communication employing a base station, short distance wireless communication such as an IrDA infrared communication, Bluetooth, Bluetooth Low Energy (BLE), a Wi-Fi, NFC wireless communication, and a Zigbee, wireless LAN communication, and a wired communication. Sensor module 160 may be attached to the inside or outside of the electronic device 100 to determine the state of the electronic device 100 or the peripherals attached to the device. An acceleration sensor, a gyroscope or a slope sensor may measure the movement and/or position of the electronic device 100, and a touch sensor or a grip sensor may measure a position where a user touches or grips the electronic device 100 and/or a pressure with which the user grips the electronic device.

Device 100 may display a moving picture, a still picture, or a GUI on the touchscreen 133 of the electronic device 100, and output a signal sound or audio of a voice to the speaker 141. The electronic device 100 detects an inactive region (a hovering lock region) and determines the inactive region on the touchscreen 133.

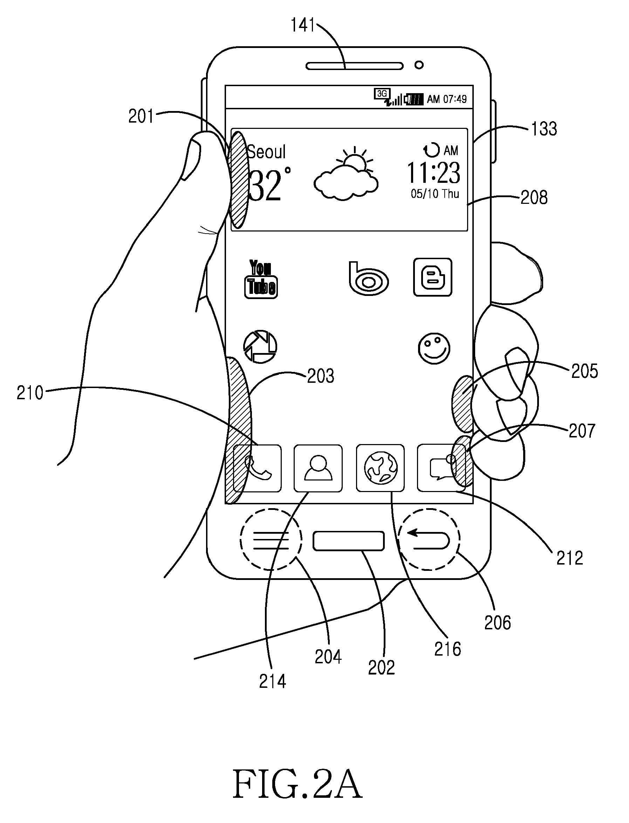

FIGS. 2A to 2E illustrate determining a hovering lock region in an electronic device. Referring to FIG. 2A, unit 132 acquires input data in response to dragging an input means (e.g. stylus, finger) on the touchscreen 133 or moving the input means at a position separated by a predetermined distance (hover) from the touchscreen 133. In addition, the electronic device 100 may include speaker 141 for outputting sounds on the upper portion of the electronic device 100, button 202 and touch button 204 or 206 at a fixed position. Where a user grips the electronic device 100, a portion of his hand or a portion of his finger may be positioned at a predetermined distance from the touchscreen, and the electronic device 100 may sense the portion of his hand or the portion of his finger using the input means. In hover input mode, the electronic device 100 may set one or more partial regions of the touchscreen 133 to a hovering lock region that ignores input when a hover input is detected and ignores a gesture in the lock region.

In the touchscreen 133 where a user grips the electronic device 100 and performs detection using a finger and a palm as input means, hovering detection regions 201, 203, 205, 207 for receiving an input from the boundary of the touchscreen are determined as hovering lock regions where input is ignored. For example, in detecting the object 208 on the touchscreen 133 via a hover input of a finger, the electronic device 100 may execute a weather program corresponding to displayed object 208, but determine a hovering input in a predetermined range starting from the boundary as a hovering lock region, and may not process an instruction for executing the weather program object 208 inside the region 201 which is a lock region even when a hover input is detected. For another example, in detecting the region 203 on the touchscreen 133 via a hovering input of a palm, the electronic device 100 may execute a call making program corresponding to a displayed first object 210, but determine a hover input of a predetermined range starting from the boundary as a hovering lock region, and may ignore a hover inside the region 203 which is the lock region.

The hovering lock regions may not be displayed on the touchscreen 133. Also though not shown, the electronic device 100 may select a function of an inactive region, and in response to detecting a hover input in a lock region, the electronic device 100 may output vibration, sounds or an error message, for example

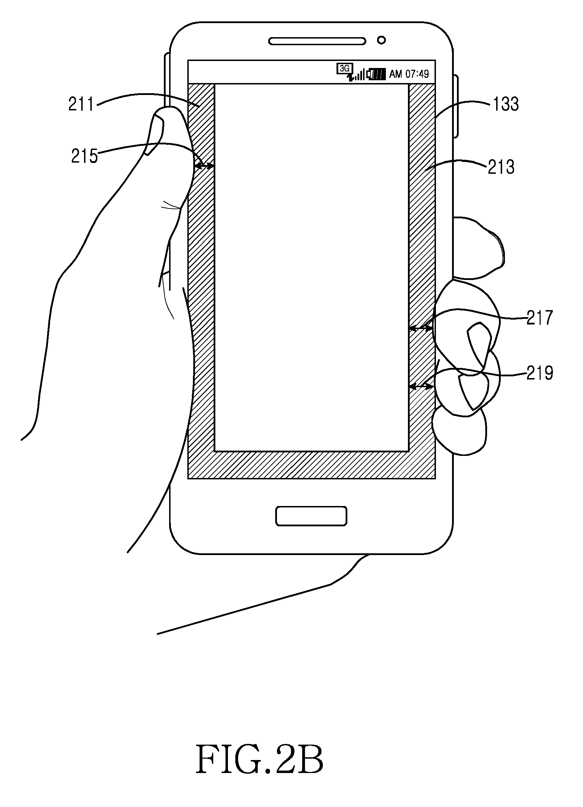

Referring to FIG. 2B, in a hover input mode, the electronic device 100 may detect a hover input from the boundary region (for example, the left side) of the touchscreen 133, determine a hover detection distance 215 towards the touchscreen 133 center, and determine an area 211 from the left boundary corresponding to the distance 215 as an inactive region. The electronic device 100 may detect a plurality of hover inputs above the touchscreen 133, including from the right side boundary region and determine distances 217 or 219 towards the center of the touchscreen, and determine an area 213 from the right boundary corresponding to one of (or an average of) distances 217 or 219 as a hover lock region. In addition a predetermined vertical hover region above the touchscreen may be determined comprising an upper and lower vertical boundary as well as the left or right boundary. The area 211 or 213 may be associated with hover detection prohibition.

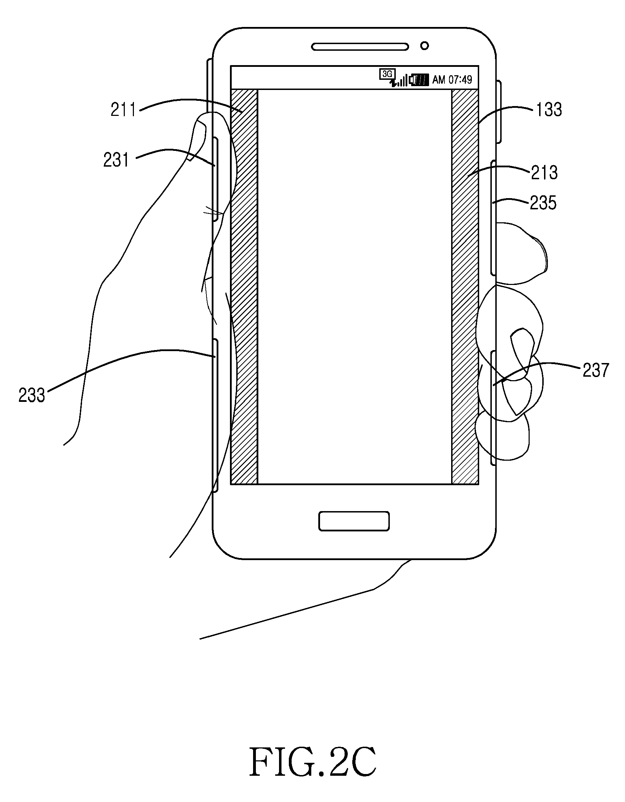

Referring to FIG. 2C, the electronic device 100 may include a grip sensor or a touch sensor for detection of gripping, and determine a predetermined region of the touchscreen 133 for receiving an instruction via hover as a hover lock region. For example, in the hover input mode, the electronic device 100 may detect a gripping operation via the grip sensor or the touch sensor, and may determine one or more predetermined regions of the touchscreen 133 as a hover lock region depending on a position of the detected grip. A predetermined region may be determined within a predetermined area as the outer upper, lower, left, right region, as a hover lock region depending on detected grip or touch position. The grip sensor is not limited to portions 231, 233, 235, 237 as illustrated in FIG. 2C. The grip sensor may automatically determine a position where the electronic device 100 is gripped, and automatically determine one or more partial hover lock regions depending on detected grip position as illustrated in FIG. 2A.

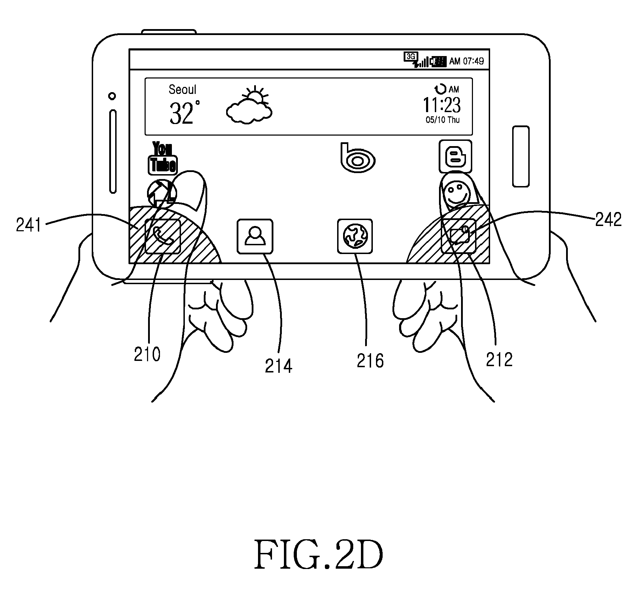

Referring to FIG. 2D, where the electronic device 100 is used horizontally, there is possibility that a user uses both hands. The electronic device 100 detects it is in a horizontal mode state via sensors such as an acceleration sensor, a gyroscope, or a slope sensor, and a touchscreen hover lock region corresponding to the horizontal mode of the electronic device 100 is determined. The electronic device 100 may determine lower regions 241 or 242 of the touchscreen 100 as hover lock regions, and may ignore hover input commands in the hover lock region. In an embodiment, in the horizontal mode state, device 100 performs advance determination of regions 241 or 242 as hover lock regions where there is a possibility of detection of an unintended hover. Also one or more hover lock regions may be determined via a setting menu. In addition, device 100 uses sensors 160 in determining other modes, not just the horizontal mode. In these other modes a corresponding hover lock region may be set where the electronic device 100 is positioned or gripped such as in a vertical mode shown in FIGS. 2A to 2C. The electronic device 100 inhibits execution of a call making program, for example, in response to a user selecting a first object (a call making program icon 210) positioned in the hover lock region 241 of FIG. 2D via hover. Similarly, the electronic device 100 inhibits execution of text message program, in response to a user selecting a second object (a text message program icon 212) positioned in the hover lock region 242 via hover. However, electronic device 100 executes a program corresponding to a selected third object or fourth object in response to selection of an address program icon 214 or an Internet program icon 216 respectively, positioned in the hover active region of the touchscreen 133 via hover.

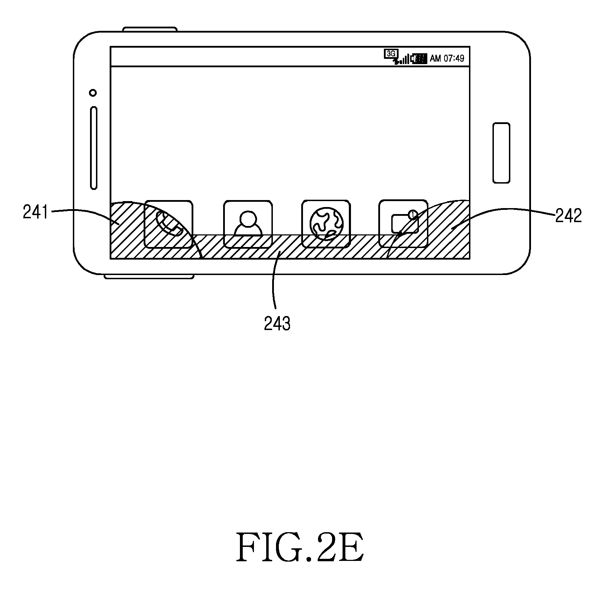

Referring to FIG. 2E, in the hover input mode, the electronic device 100 may change one or more hover lock regions which are set in a predetermined region of the touchscreen 100. For example, in case of hover input when device 100 is in a horizontal mode as illustrated in 241 and 242 of FIG. 2D, a hover lock region is determined. The electronic device 100 may additionally set a hover lock region of a predetermined region as illustrated in 243 of FIG. 2E via configuration using a menu for setting a hover lock region. Upon entering the hover input mode during the horizontal mode, the electronic device 100 may determine regions 241, 242, 243 as hover lock regions as illustrated in FIG. 2E.

The electronic device 100 may display the first object (the call making program icon 210), the second object (the address program icon 214), the third object (the Internet program icon 216), and the fourth object (the text message program icon 212) on the touchscreen 133, and each object may overlap the hover lock region in whole or in part. For example, the first object 210 or the fourth object 212 may entirely overlap the hover lock region and electronic device 100 inhibits execution of associated commands. Similarly, the second object 214 or the third object 216 may partially overlap the hover lock region and electronic device 100 may inhibit or initiate execution of associated commands, in response to predetermined configuration data.

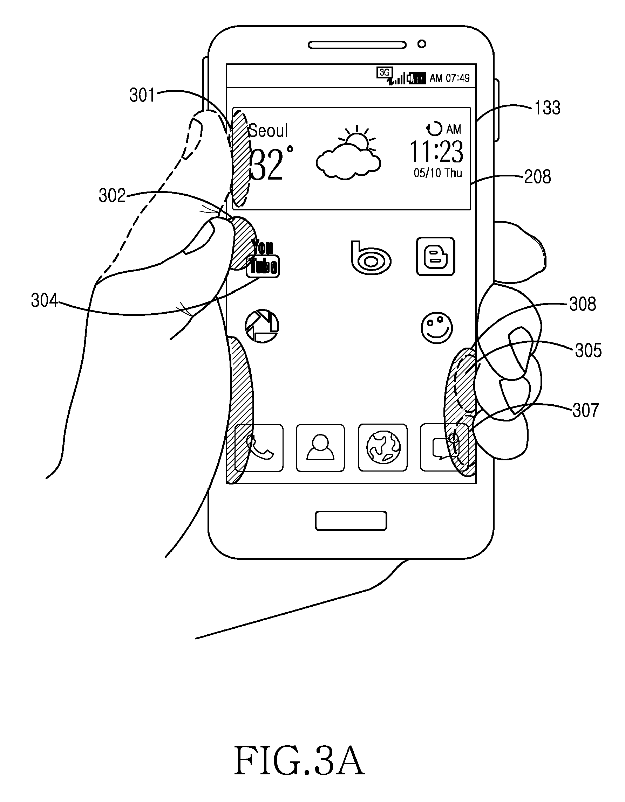

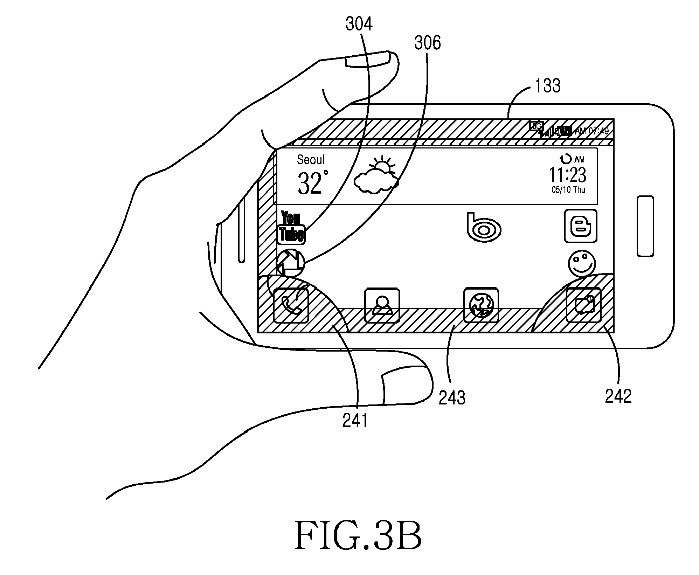

FIGS. 3A and 3B show extending a hover lock region in an electronic device. Referring to FIG. 3A, the electronic device 100 may extend a hover lock region determined in a hover input mode. The electronic device 100 may detect a hover input from the boundary of the touchscreen 133 as illustrated in 308 during the hover input mode, and determine the region 308 as a hover lock region partially overlapping icon 307 and inhibit a command associated with selection of icon 307. The electronic device 100 may detect a region 302 of the touchscreen 133 as a hover input region in response to a hover gesture to the region 301. The electronic device 100 may determine a hover input region input from the boundary of the touchscreen 133 in response to an input means location (e.g. finger grip) and detect change in hover input region in response to movement of the input means. In response to input means movement away from a hover lock region, the hover lock region may be released.

In response to the hover lock region 301 moving to region 302 due to movement of the input means (e.g. finger), the electronic device 100 may inhibit commands associated with selection of an object 304 since hover lock region 302 overlaps the second object 304. The electronic device 100 may detect hover input regions such as regions 305 and 307 during the hover input mode, and when a reference condition is met, the electronic device 100 may extend the hover input regions to a region 308. For example, the reference condition may be determined as a in response to two or more hover lock regions such as the regions 305 and 307 being equal to, or less than, a predetermined distance apart, or where hover lock regions partially overlap.

Referring to FIG. 3B, in hover input mode during horizontal orientation of device 100, the electronic device 100 may determine regions 241, 242, 243 as hover lock regions. In case of gripping the electronic device 100 as illustrated in FIG. 3B, the electronic device 100 may perform an unintended hover input from the left boundary of the touchscreen 133, and receive an inadvertent hover input command to select one or more objects such as of objects 304, 306 and 309. When detecting a hover input from the left boundary of the touchscreen 133, the electronic device 100 may additionally determine a hover lock region in the left peripheral region of the touchscreen 133. In response to detecting a hover input from the upper boundary of the touchscreen 133, the electronic device 100 may additionally determine a hover lock region in the upper peripheral region of touchscreen 133. The electronic device 100 may determine a hover lock region in the left peripheral region and a hover lock region in the right peripheral region when detecting a hover input from the right boundary.

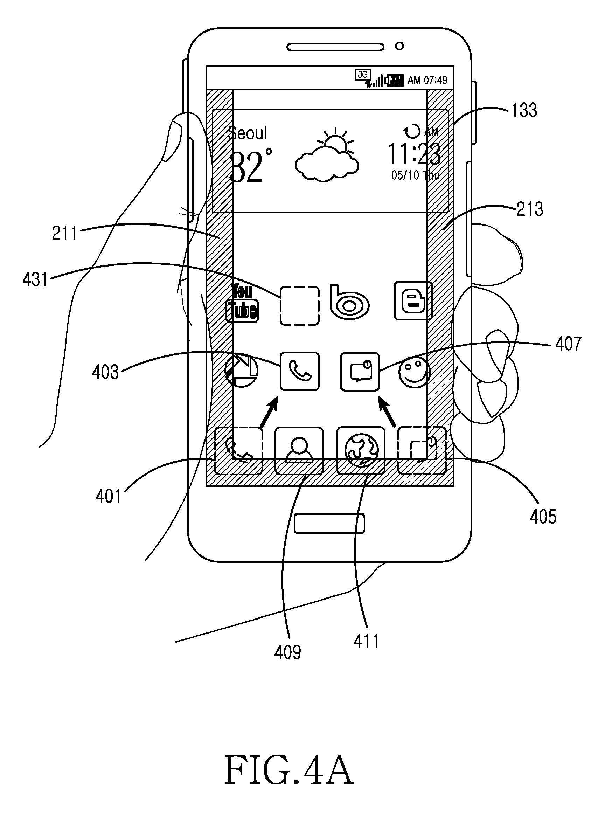

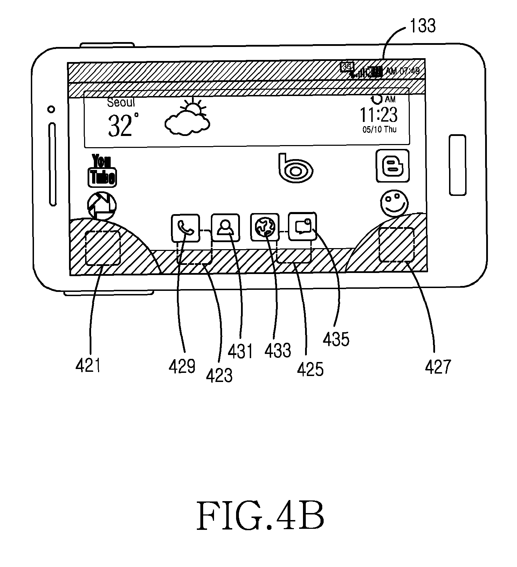

FIGS. 4A and 4B show a hover input mode in an electronic device 100 where the hover lock region may overlap an object in whole or in part on the touchscreen 133. In this case, the electronic device 100 may temporarily change the state of the object that overlaps the hover lock region so that the object may not overlap the hover lock region. Referring to FIG. 4A, when entering the hover input mode in the vertical mode state, the electronic device 100 may determine regions 211 and 213 as hover lock regions as described in connection with FIG. 2B. The electronic device 100 may determine a first object (210 of FIG. 2A), a second object (214 of FIG. 2A), a third object (216 of FIG. 2A), and a fourth object (212 of FIG. 2A), for example that overlap the hover lock region and may temporarily move the position of the first object 210 and the fourth object 212.

As an example of temporarily moving the position of the object, the first object 210 is moved from a position 401 to a position 403 and object 212 is moved from a position 405 to a position 407. Further, the electronic device 100 may determine a position 431 where an object is not positioned, and move a relevant object to the position 431. In the case where a position to which an object may move does not exist, the object may be positioned at its original position. In the case where an object overlaps a hover lock region device 100 may temporarily change the position of the relevant object. In response to entering hover input mode, the electronic device 100 may automatically move objects meeting a reference condition. In addition, in response to releasing the hover lock region, the electronic device 100 may restore the temporarily moved objects to their original positions. For example, when the hover lock region is released, the first object 210 moved to the position 403 may move to the original position 401, and when the hover lock region is released, the fourth object 212 moved to the position 407 may move to the original position 405.

Referring to FIG. 4B, in the hover input mode during horizontal orientation of device 100, the electronic device 100 may determine regions 241, 242, 243 as hover lock regions as illustrated in FIG. 2E. The electronic device 100 may determine an object (e.g. displayed icon) overlaps the hover lock region and when a reference condition is met, the electronic device 100 may temporarily move the position of the object. In the case where an object meets the reference condition, the electronic device 100 may determine positions and move the objects so that the objects may not overlap the hover lock region, and additionally change the size of the objects, for example, while moving the objects. An object is moved from a position 421 to a position 429, a second object is moved from a position 423 to a position 431, a third object is moved from a position 425 to a position 433, and a fourth object is moved from a position 427 to a position 435 while maintaining horizontal symmetry, and by reducing the size of objects.

In response to entering the hover input mode, the electronic device may automatically move objects meeting the reference condition. In addition, like FIG. 4A, when the hover lock region is released, the electronic device 100 may restore the temporarily moved objects to their original positions.

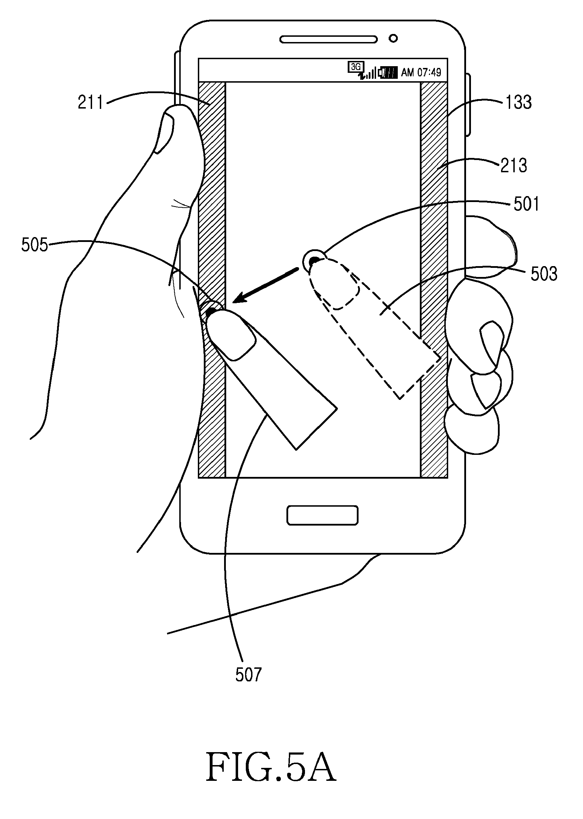

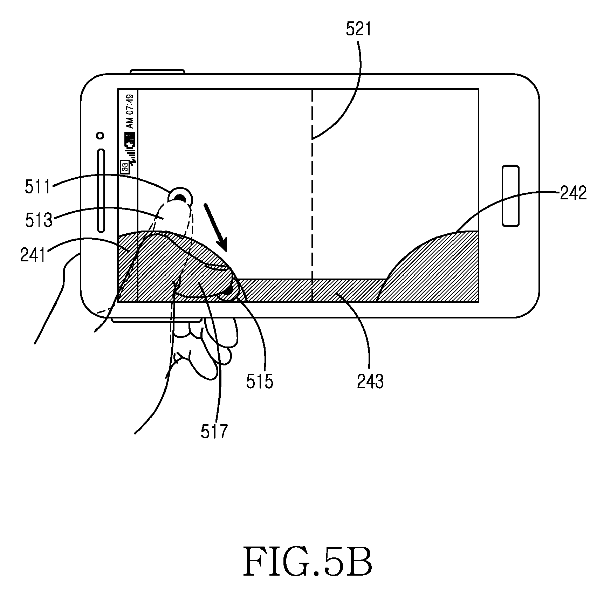

FIGS. 5A and 5B show releasing a hover lock region in electronic device 100 in response to a predetermined hover gesture. In case of releasing the hover lock region, the electronic device 100 may execute a hover input command detected in the released hover lock region. The electronic device 100 may generate (or display) a hover cursor (such as a pointer or a ghost image 501) and a user may move (507) an input means to move the hover cursor to a hover lock region 211, and release the hover lock region via a hover release operation that removes the hover cursor 505 from the hover lock region. In performing an operation of removing the hover cursor 505 (hover lock region release operation) in the left hover lock region, the electronic device 100 may set to release the relevant left hover lock region 211 or release both hover lock regions 211 and 213. The electronic device 100 may automatically perform the hover lock region release operation or display a menu for selecting release of the hover lock region or may maintain the hover lock region release option on the touchscreen 133 as a popup, or output an associated notice message using sounds via a speaker 141.

Referring to FIG. 5B, the electronic device 100 may generate (or display) a hover cursor (such as a pointer or a ghost image 511) in response to hover (513) of an input means (e.g. finger) in a hover active region exclusive of a hover lock region. Further in response to movement (517) of the input means moving the hover cursor, the hover lock region 241 may be released. In response to removing a hover cursor 515 (hover lock region release operation) in hover lock region 241 of the touchscreen 133 as illustrated in FIG. 5B, the electronic device 100 may release hover lock region 241 or release hover lock regions 241, 242 and 243. In addition, in performing the hover lock region release operation in the region 241, the electronic device 100 may set to release the hover lock region corresponding to just the region left of the center line 521. Device 100 may perform the hover lock region release operation, or display a menu for determining whether to release the hover lock region or maintain the hover lock region release option on the touchscreen 133 as a popup, or output a notice message using sounds via a speaker 141.

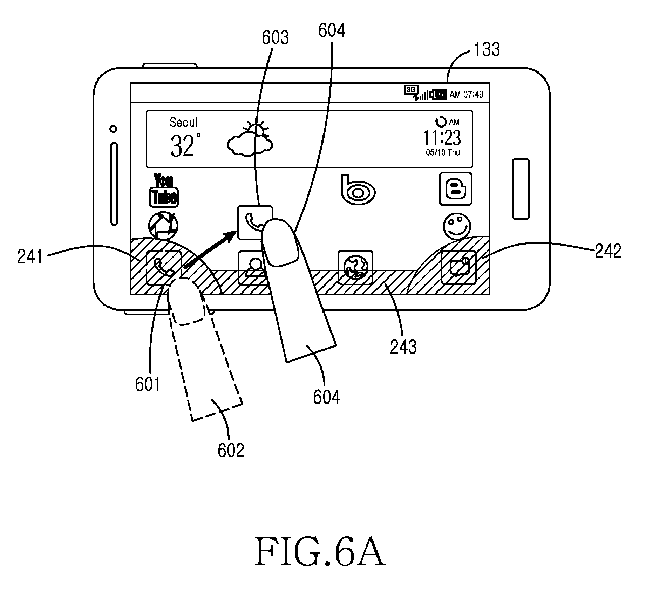

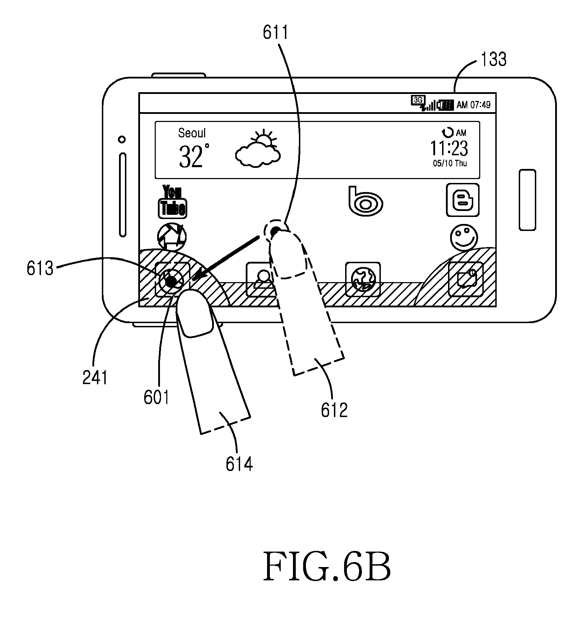

FIGS. 6A and 6B show executing a command associated with an object positioned in a hover lock region in response to a predetermined hover gesture. Referring to FIG. 6A, the electronic device 100 may execute a command associated with an object positioned in a hover lock region. In response to hover of an input means (602) in a hover lock region to select an object (call making program icon 601), and movement of the input means to a hover active region outside the hover lock region 241, device 100 executes the call making program and drops object 603 in the active region of the touchscreen 133 via a release operation (604). Referring to FIG. 6B, the electronic device 100 may generate (or display) a hover cursor in response to hover (612) in the hover active region exclusive of a hover lock region, move (614) the hover cursor to a hover lock region 241 and position (613) the hover cursor on an object 601 in response to movement of the input means and execute a call making program associated with object 601 positioned in the hover lock region 241 in response to releasing the hover using the cursor.

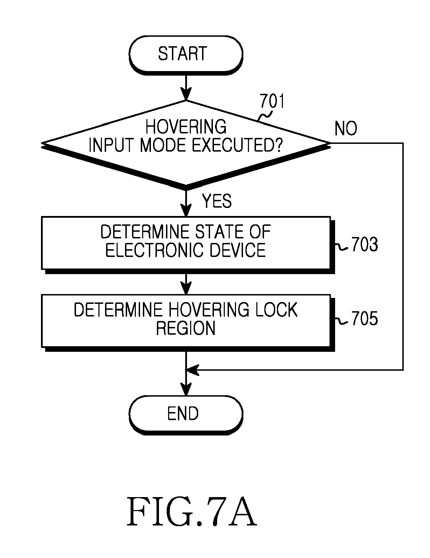

FIGS. 7A to 7D show program operation in an electronic device 100 that may execute a hover input mode, and determine a portion of the touchscreen 133 where a user may input a hover command and one or more hover lock regions where hover commands are inhibited. The electronic device 100 may release one or more hover lock regions of the touchscreen 133 via a predetermined gesture or motion, for example, and the hover lock region released in the touchscreen 133 becomes a hover active region where hover commands are performable. In addition, the electronic device 100 may select an object displayed in a hover lock region or a function of the electronic device 100 to execute a command in a non-released hover lock region. Referring to FIG. 7A, the electronic device 100 may determine a state of the electronic device 100, and determine a hover lock region in response to the determined state of the electronic device.

In step 701, the electronic device 100 may execute a hover input mode where touchscreen 133 is not directly touched and where an input means positioned within a predetermined distance range from the touch screen face may be detected as a hover input. In response to the input means being positioned within a predetermined range from the touchscreen 133, the electronic device 100 may display a hover cursor that may determine a hover state, move the hover cursor by moving the hover input means, and detect an input command entered via the hover cursor. In step 703, the electronic device 100 may determine the state of the electronic device 100 via one or more sensors. For example, the electronic device 100 may determine the state of the electronic device 100 such as horizontal or vertical orientation states of the electronic device 100 using sensors 160. In addition, the electronic device 100 may determine the a grip state of the electronic device 100 via a grip sensor or touch sensor. In step 705, the electronic device 100 may determine a corresponding hover lock region depending on the state of the electronic device 100.

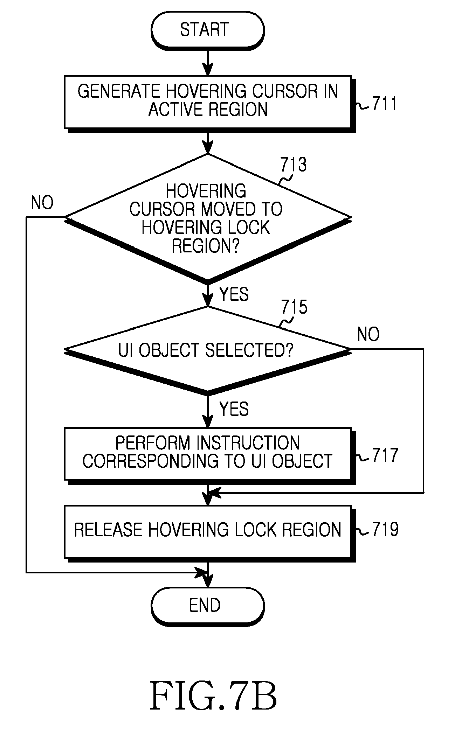

Referring to FIG. 7B, the electronic device may display a hover cursor (or pointer) in the hover active region of the touchscreen 133, move the displayed hover cursor to the hover lock region, detect a gesture for selecting an object to perform a function of the hover lock region, and release the hover lock region where an object (e.g. icon) is positioned. In step 711, the electronic device 100 may detect a predetermined gesture or motion in the hover active region of the touchscreen 133 and generate a hover cursor. A predetermined gesture may maintain a hover state on the touchscreen 133 for at least a predetermined time. A predetermined gesture may also comprise touching the touchscreen 133 one or more times, a gesture for clicking a button of electronic device 100, or a motion the electronic device 100.

While the electronic device 100 operates a hover function, the hover cursor may be displayed in a predetermined region of the touchscreen 133 or an object indicated by the hover cursor may be displayed. The electronic device 100 may select an obj ect displayed on the touchscreen 133 of the electronic device 100 or a function of the electronic device via a hover command. In step 713, the electronic device 100 may move the hover cursor generated in the hover active region to the hover lock region. The hover lock region of the touchscreen 133 may include an icon for initiating a function which a user desires to perform via a hover cursor or an object which the user desires to select via the hover cursor. A predetermined gesture or a motion is detectable by device 100. In response to moving the hover cursor from the hover active region of the touchscreen 133 to a hover lock region, the electronic device 100 in step 715 determines if a UI object is selected otherwise terminates the process of FIG. 7B.

In step 715, the electronic device 100 may select an object displayed in the hover lock region and perform a predetermined operation in the hover lock region via a hover cursor. For example, a cursor generated in the hover active region of the touchscreen 133 may be moved to the inactive region, or generated in the hover active region and moved to the hover lock region before/after or concurrently with performance of a predetermined gesture or device motion, for example The predetermined operation may be an operation of selecting the function of the electronic device 100 such as an operation of selecting an object, for example displayed on the touchscreen 133. In step 717 a function is performed in response to selection of an object displayed on the touchscreen 133. Device 100 may perform step 719 in response to releasing display of the hover cursor or hover without selection. In step 717, the electronic device 100 may perform an operation corresponding to an object selected in the hover lock region. In the case where steps 711 to 715 of FIG. 7B performed on the touchscreen 133 match a predetermined operation, the electronic device 100 may perform an operation corresponding to an object selected in the hover lock region.

In step 719, the electronic device 100 may release the hover lock region of the touchscreen 100 depending on predetermined configuration settings. For example, the electronic device 100 may provide a menu enabling release of the hover lock region of the touchscreen 133 via a setting menu. Also electronic device 100 may release the hover lock region in response to a detected gesture or motion or predetermined setting and release the hover lock region. In addition, in response to selecting and performing a function of the electronic device 100 or an object, for example displayed on the hover lock region of the touchscreen 133 as in FIG. 6B or steps 711 to 717 of FIG. 7B, the electronic device 100 may additionally automatically release the hover lock region. The electronic device 100 may determine to release a portion of the hover lock region that displays the selected object or function of the electronic device 100. Further, device 100 may use the hover lock region by selecting contents such as an object displayed on the hover lock region without releasing the hover lock region.

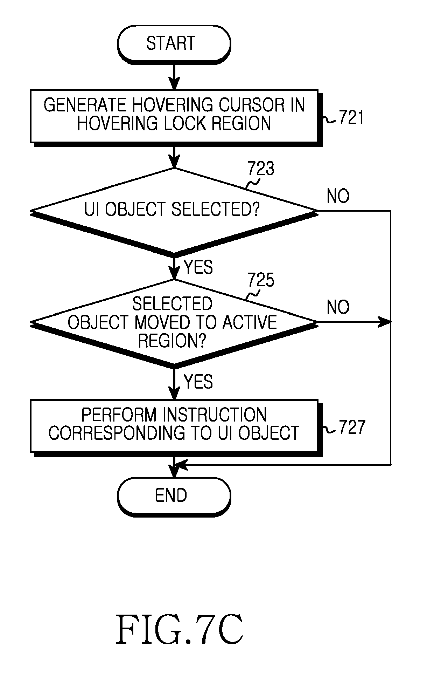

Referring to FIG. 7C, the electronic device 100 may generate (or display) a hover cursor (or pointer) in the hover lock region of the touchscreen 133, perform a hover gesture for selecting an object or a function of the electronic device 100 and move the hover cursor to the hover active region. Device 100 may also drop the cursor to perform an operation corresponding to the selection, and release the hover lock region. In step 721, the electronic device 100 may perform a predetermined hover gesture or motion in the hover lock region of the touchscreen 133 to generate a hover cursor. The hover cursor may select an object displayed on the touchscreen 133 of the electronic device 100 or a function, for example of the electronic device. A hover gesture for generating the hover cursor may be a gesture for maintaining a hover state on the touchscreen 133 for at least a predetermined time, a gesture for touching the touchscreen 133, a gesture for clicking a button included in the electronic device 100, or a predetermined motion of device 100. In step 723, the electronic device 100 may select an object displayed on the touchscreen 133 of the electronic device 100 or a function of the electronic device 100 via the hover cursor generated in the hover lock region of the touchscreen 133. The electronic device 100 may select an object via the hover cursor such as by a touch operation or an operation for positioning the hover cursor above an object and clicking a predetermined button. In addition, where the electronic device 100 may select an object displayed in the hover lock region of the touchscreen 133, step 723 may be omitted.

In step 725, the electronic device 100 may move (for example, drag) a selected object to the hover active region. The electronic device 100 is inhibited from performing an operation in the hover lock region of the touchscreen 100. Therefore, to select and operate an object displayed in the hover lock region of the touchscreen 133 or a function of the electronic device 100, the electronic device 100 needs to release the hover lock region and re-select the object. Device 100 may perform an operation of moving the hover cursor to the hover active region to release (or drop the object) in the active region and perform a function associated with the object in step 727. If no object is selected and moved in steps 723 and 725, electronic device 100 ends the process of FIG. 7C. Device 100 may release the hover lock region of the touchscreen 133 in response to a predetermined setting, gesture or device 100 motion.

Device 100 may determine to release a portion of the hover lock region, where a selected object or function of the electronic device 100 is displayed or determine to release one or more of the hover lock regions.

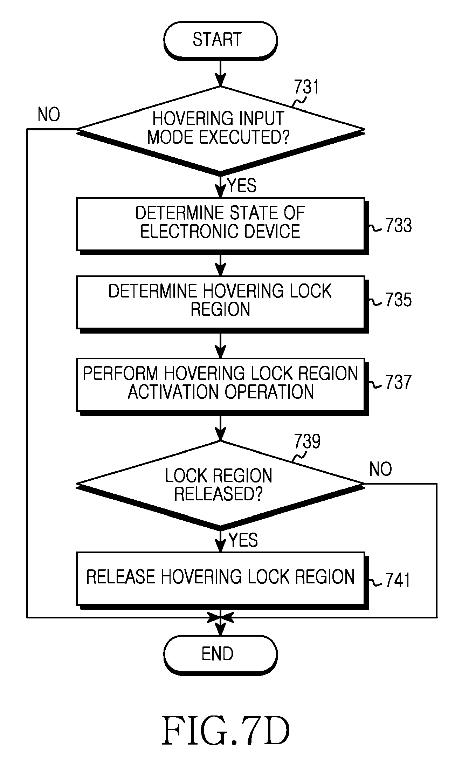

Referring to FIG. 7D, the electronic device 100 may execute (or operate) a hover mode, determine the state of the electronic device 100, determine the hover lock region of the touchscreen 133 depending on the state of the electronic device 100, and detect a hover gesture or motion in the hover active region to release the hover lock region. In step 731, the electronic device 100 may execute the hover input mode by performing a predetermined gesture or motion on the touchscreen 133 for performing a hover input. If hover input mode is not executed, the electronic device 100 may end the process of FIG. 7D. In step 733, state of the electronic device 100 is determined. Device 100 may detect a hover input depending on a height by which the object is separated from the touchscreen 133, a gesture, or a motion, for example, Device 100 may determine a hover detection range (for example, hover detect sensitivity of the touchscreen or a distance that may detect hover) depending on the state of the input means for inputting an instruction or the state of the electronic device 100 that receives an instruction via the touchscreen 133. Device 100 may determine device 100 is horizontal or vertical via at least one sensor 160. In addition, the electronic device 100 may determine sensitivity of the input means for receiving input, and may control a range where the touchscreen 133 may detect input or a hover state.

In addition, the electronic device 100 may determine the state of an object gripping the electronic device 100. In case of gripping the electronic device 100 with a hand, fingers surrounding the electronic device 100 may be positioned within a range where the touchscreen 133 may detect hover, and the finger may serve as an input means for inputting hover and inadvertently detect an input. The electronic device 100 may detect the fingers positioned in the neighborhood of the touchscreen 133 to determine the range of hover input. In addition, the electronic device 100 may determine a grip state via a grip sensor (or a touch sensor). In step 735, the electronic device 100 may determine a hover lock region where hover commands are inhibited in a predetermined region of the touchscreen 133 depending on the state of the electronic device 100. Further, device 100 determines the hover lock region while the electronic device 100 is in the state determined in step 733. In step 737, the electronic device 100 may use a hover lock region of the touchscreen 133 in response to a gesture or motion. In step 739, the electronic device 100 may release one or more hover lock regions of the touchscreen 133 in response to detection of a predetermined gesture or motion and upon determining not to release the hover lock region, the electronic device 100 may end the process of FIG. 7D. In step 741, the electronic device 100 may release the hover lock region depending on a method determined in advance by the hover control program 114. For example, the electronic device 100 may perform an instruction associated with the hover lock region, release the relevant hover lock region, release one or more hover lock regions of the touchscreen 133, and release all of the hover lock regions of the touchscreen 133.

The methods according to the various embodiments described in claims or the specification of the present invention may be implemented in the form of a hardware, software, and a combination of the hardware and the software. A computer readable storage medium for storing one or more programs (software modules) may be provided. One or more programs stored in the computer readable storage medium are configured for execution by one or more processors inside the electronic device 100. One or more programs may include instructions for enabling the electronic device 100 to execute the methods according to the various embodiments described in claims or the specification of the present invention. A program (a software module, a software) may be stored in Random Access Memory (RAM), a non-volatile memory including a flash memory, Read Only Memory (ROM), an Electrically Erasable Programmable Read Only Memory (EEPROM), a magnetic disc storage device, a Compact Disc (CD)-ROM, Digital Versatile Discs (DVDs), or other types of optical storage devices, and a magnetic cassette. Alternatively, the program may be stored in a memory configured by a portion or all of these. Also, a plurality of memories may be provided. Also, a program may be stored in an attachable storage device accessible to the electronic device via a communication network such as the Internet, an Intranet, a Local Area Network (LAN), Wide LAN (WLAN), or SAN, or a communication network. The storage may access the electronic device via an external port. Also, a separate storage unit on a communication network may access the portable electronic device 100.

Although the system has been shown and described with reference to certain exemplary embodiments thereof, it will be understood by those skilled in the art that various changes in form and details may be made therein. Therefore, the scope of the system is not limited to the above-described embodiments.

The above-described embodiments can be implemented in hardware, firmware or via the execution of software or computer code that can be stored in a recording medium such as a CD ROM, a Digital Versatile Disc (DVD), a magnetic tape, a RAM, a floppy disk, a hard disk, or a magneto-optical disk or computer code downloaded over a network originally stored on a remote recording medium or a non-transitory machine readable medium and to be stored on a local recording medium, so that the methods described herein can be rendered via such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. The functions and process steps herein may be performed automatically or wholly or partially in response to user command. An activity (including a step) performed automatically is performed in response to executable instruction or device operation without user direct initiation of the activity. No claim element herein is to be construed under the provisions of 35 U.S.C. 112, sixth paragraph, unless the element is expressly recited using the phrase "means for."

## Claims

1. A method employed by an electronic device, the method comprising:
determining a state of the electronic device in a hover input mode, the state comprising at least one of,
(a) an orientation of the electronic device and
(b) finger locations of a grip holding the electronic device;
setting a hover lock region on a touchscreen in response to the determined state of the electronic device; and
inhibiting activation of a command associated with selection of an object in the hover lock region.

2. The method of claim 1, wherein determining the state of the electronic device comprises:
determining a motion of the electronic device using at least one of an acceleration sensor, a gyroscope or a slope sensor.

3. The method of claim 1, wherein determining the state of the electronic device comprises:
determining a user gripping state of the electronic device using a grip sensor or a touch sensor.

4. The method of claim 3, wherein the hover lock region is changed in response to the user gripping state.

5. The method of claim 1, including determining the hover lock region in response to at least one of, a height at which a hover input unit is positioned from the touchscreen, an area of a hover input, a hover input start position, and a speed at which a hover input unit moves from the touchscreen.

6. The method of claim 5, wherein the hover lock region excludes a hover cursor position.

7. The method of claim 6, wherein the hover lock region is selected in response to movement of the hover cursor.

8. The method of claim 1, wherein the hover lock region comprises at least one of, a peripheral region of an upper portion, a lower portion, a left portion, a right portion, and a vertex region of the touchscreen.

9. The method of claim 1, further comprising:
changing a position of a hover cursor from a hover active region to a hover lock region in response to a detected hover input,
processing a command associated with the hover cursor position by at least one of, processing a command associated with an object where the hover cursor is positioned, and releasing a hover lock region.

10. An electronic device comprising:
a touchscreen; and
a processor connected to the touchscreen,
Configured to determine a state of the electronic device in a hover input mode, the state comprising at least one of,
(a) an orientation of the electronic device and
(b) finger locations of a grip holding the electronic device,
sets a hover lock region on a touchscreen in response to the determined state of the electronic device and
inhibits activation of a command associated with selection of an object in the hover lock region.

11. The electronic device of claim 11, wherein the processor configured to initiates display of a hover cursor in a hover active region in response to a detected hover command,
move the hover cursor to the hover lock region,
in response to a selection of an object positioned in the hover lock region using the hover cursor, process a command associated with the object, and
provides a processing result on the touchscreen.

12. The electronic device of claim 11, wherein the processor further configure to initiate release of a hover lock region.

13. The electronic device of claim 11, wherein In response to user command the processor configured to
detect a hover input in the hover lock region,
selects a UI object in the hover lock region,
drag the selected UI object to an active region,
drop the selected UI object, and
process a command associated with the object.

14. The electronic device of claim 14, wherein the processor further configured to initiate release of the hover lock region.

15. The electronic device of claim 14, wherein the processor further configured to initiate display of a menu enabling selection of release of the hover lock region.
